(19) Europäisches Patentamt
European Patent Office
Office européen des brevets

(11) **EP 2 873 683 B1**

(12) **EUROPEAN PATENT SPECIFICATION**

(45) Date of publication and mention
of the grant of the patent:
**17.10.2018 Bulletin 2018/42**

(51) Int Cl.:
**C08G 63/137** *(2006.01)*          **C09D 5/16** *(2006.01)*
**C09D 167/00** *(2006.01)*

(21) Application number: **13816515.4**

(22) Date of filing: **11.07.2013**

(86) International application number:
**PCT/JP2013/069041**

(87) International publication number:
**WO 2014/010702 (16.01.2014 Gazette 2014/03)**

(54) **POLYESTER RESIN FOR ANTIFOULING COATING MATERIALS, METHOD FOR PRODUCING SAME, ANTIFOULING COATING MATERIAL COMPOSITION, ANTIFOULING COATING FILM, AND ANTIFOULING BASE**

POLYESTERHARZ FÜR FÄULNISHEMMENDE BESCHICHTUNGSMATERIALIEN, HERSTELLUNGSVERFAHREN DAFÜR, FÄULNISHEMMENDE BESCHICHTUNGSMATERIALZUSAMMENSETZUNG, FÄULNISHEMMENDER BESCHICHTUNGSFILM UND FÄULNISHEMMENDE BASE

RÉSINE POLYESTER POUR DES MATIÈRES DE REVÊTEMENT ANTISALISSURE, SON PROCÉDÉ DE FABRICATION, COMPOSITION DE MATIÈRE DE REVÊTEMENT ANTISALISSURE, FILM DE REVÊTEMENT ANTISALISSURE ET BASE ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2012   JP 2012156855**

(43) Date of publication of application:
**20.05.2015  Bulletin 2015/21**

(73) Proprietor: **Chugoku Marine Paints, Ltd.**
**Hiroshima 739-0652 (JP)**

(72) Inventors:
• **FUKUTA Norihiro**
**Ichihara-shi**
**Chiba 290-8567 (JP)**
• **NIIMOTO Jyunji**
**Otake-shi**
**Hiroshima 739-0652 (JP)**
• **TADA Isao**
**Ichihara-shi**
**Chiba 290-8567 (JP)**
• **AIZU Kazuo**
**Ichihara-shi**
**Chiba 290-8567 (JP)**

(74) Representative: **Hoffmann Eitle**
**Patent- und Rechtsanwälte PartmbB**
**Arabellastraße 30**
**81925 München (DE)**

(56) References cited:
EP-A1- 0 522 648          WO-A1-2011/162359
JP-A- H0 726 125          JP-A- H08 301 957
JP-A- 2001 152 086        US-A- 5 397 641

## Description

### Technical Field

The present invention relates to the use of a coating composition comprising a polyester resin for preventing fouling of a base material.

### Background Art

The surfaces of base materials that are subjected to underwater conditions for long periods, in ships, underwater structures, fishing nets and the like, are prone to attachment of various types of aquatic creatures including animal life such as oysters, mussels and barnacles or plant life such as laver, as well as bacteria. Proliferation of these aquatic creatures on base surfaces can produce increased ship surface roughness, and can thus lower speed and increase fuel consumption, while also potentially resulting in damage as anticorrosive coating films provided on base surfaces can become damaged, reducing the strength and function of underwater structures or notably shortening their life. In addition, aquatic creatures adhere to and proliferate on fishing nets such as aquaculture nets and fixed shore nets, often causing serious problems such as oxygen deficient mortality of fish catches due to mesh obstruction. Furthermore, adhesion of aquatic creatures to seawater plumbing pipes for thermal power and nuclear power plants, and their proliferation, can create hindrances to the plumbing circulation of cooling water. Much research and development has been devoted to antifouling coating materials designed to be coated onto base surfaces to prevent adhesion of aquatic creatures.

For example, patent literature 1 discloses a hydrolyzable polyester resin for an antifouling coating material, comprising a specific dicarboxylic acid component and a specific glycol component, and having improved resistance to seawater and solubility.

Furthermore, in light of revised air pollution prevention laws and environmental problems, there has been demand in the field of antifouling coating materials for reducing volatile organic compound (VOC) contents of coating materials, in addition to providing prolonged antifouling performance (long-term antifouling properties) and reducing re-coating operations.

For example, patent literature 2 discloses a two-pack reactive antifouling coating material composition comprising a polyester resin having a specific acid value and hydroxyl value for the solid portion, in order to achieve both low VOC and a long-term antifouling property.

Patent literature 3 relates to a thermosetting powder composition which comprises (a) a specific a carboxyl-terminated polyester and (b) a glycidyl group-containing acrylic copolymer. The thermosetting powder compositions are described as particularly useful to prepare powder paints and varnishes to produce coatings with a high gloss, excellent mechanical properties, and at the same time, good weatherability.

Patent literature 4 relates to a binder composition that contains a polyester resin and a polyacrylate resin and the use of this composition for powder coatings.

Patent literature 5 relates to the use of a polyester composition in antifouling coatings, wherein one of the polyesters is obtained by reacting trimethylolpropane, sebacic acid, isophthalic acid, ethylene glycol and neopentyl glycol.

### Citation List

### Patent Literature

Patent Literature 1: Japanese Unexamined Patent Application Publication No. 2010-95585
Patent Literature 2: Japanese Patent Publication No. 4621901
Patent Literature 3: US 5,397,641
Patent Literature 4: EP 0 522 648 A1
Patent literature 5: WO 2011/162359 A1

### Summary of Invention

### Technical Problem

With conventional antifouling coating materials such as described in patent literature 1, it is necessary to use a large amount of solvent in order to obtain a viscosity suitable for coating. Consequently, the coating materials that can be provided for practical use have high VOC contents and therefore low environmental friendliness.

Antifouling coating material compositions exhibiting low VOC have also been developed, but because curing is slow compared to conventional antifouling coating materials, and depressions and the like form in the coating films when they are contacted with blocks, they have been difficult to use for coating steps in new shipbuilding operations that require contact with blocks, and when launching is initiated before the coatings have been sufficiently hardened, problems such as depressions and warping or peeling have occurred when the ships are pushed by tugboats or contacted with docks during berthing. In patent literature 2 mentioned above there is described a two-pack reactive hydrolyzable antifouling coating material composition using a reactive polyester resin, but there has been room for improvement in that with two-pack reactive types, the environmental temperature has a major effect on the reactivity/drying property, the reactivity being lowered when the environmental temperature is low, and in that two-pack reactive compositions require more processing steps during coating (effort for can opening and stirring), and more time and labor are necessary for coating operations compared to one-pack coating materials.

It is an object of the present invention, which has been accomplished in light of the aforementioned problems of the prior art, to provide a coating composition comprising a polyester resin for preventing fouling of a base material. The coating composition has improved storage stability while maintaining low VOC, thereby allowing preparation in a one-pack form, and allows increased curability to be achieved and can provide a satisfactory antifouling property and coating property for prolonged periods.

**Solution to Problem**

The invention relates to the following.

[1] Use of a coating composition comprising a polyester resin for preventing fouling of a base material, wherein the polyester resin is obtained by reacting a (a) trihydric or greater alcohol, a (b) dibasic acid or its anhydride and a (c) divalent alcohol, and then further reacting with an (d) alicyclic dibasic acid or its anhydride.

[2] The use according to [1], wherein the (d) alicyclic dibasic acid or its anhydride is an alicyclic dibasic acid anhydride.

[3] The use according to [1] or [2], wherein the (d) alicyclic dibasic acid or its anhydride comprises hexahydrophthalic anhydride.

[4] The use according to any one of [1] to [3], wherein the (a) trihydric or greater alcohol comprises one or more of glycerin and trimethylolpropane.

[5] The use according to any one of [1] to [4], wherein the polyester resin comprises one or more of an alicyclic dibasic acid anhydride and an aromatic dibasic acid anhydride as the (b) dibasic acid or its anhydride.

[6] The use according to any one of [1] to [4], wherein the (c) divalent alcohol is a branched alkylene glycol.

[7] The use according to [1], wherein the polyester resin comprises a compound having the structure represented by formula (1).

[Chemical Formula 1]

$$R^1 \{O\text{-}CO\text{-}R^2CO\text{-}O\text{-}R^3O\text{-}CO\text{-}R^4CO\text{-}OH\}_n \ldots \qquad (1)$$

[In formula (1), $R^1$ is selected from among C3-24 trivalent or tetravalent hydrocarbon groups, $R^2$ and $R^3$ are selected from among C2-34 divalent hydrocarbon groups, $R^4$ is selected from among C3-24 divalent alicyclic hydrocarbon groups, and n represents an integer of 3 or 4.]

[8] The use according to any one of [1] to [7], wherein the acid value of the solid portion of the polyester resin is 50 to 250 mgKOH/g.

[9] The use according to any one of [1] to [8], wherein the coating composition further comprises a polyvalent metal compound.

[10] The use according to [9], wherein the polyvalent metal compound is at least one compound selected from the group consisting of oxides, hydroxides, halides and carbonates of divalent or trivalent metals.

[11] The use according to [9] or [10], wherein the polyvalent metal compound is zinc oxide.

[12] The use according to any one of [9] to [11], wherein the polyvalent metal compound content of the coating composition is 10 to 700 parts by mass with respect to 100 parts by mass of the polyester resin.

[13] The use according to any one of [1] to [12], further comprising one or more of (i) a rosin and/or rosin derivative, (ii) an antifouling agent, (iii) a plasticizer, (iv) an extender pigment (excluding said polyvalent metal compound), (v) a pigment dispersant, (vi) a color pigment, (vii) a dehydrating agent, and (viii) a volatile organic compound, wherein the volatile organic compound content is no greater than 400 g/L.

**Advantageous Effects of Invention**

Based on the invention it has become possible to provide a polyester resin for an antifouling coating material with excellent storage stability and curability, to be used in an antifouling coating material that exhibits improved curability and low VOC.

Also based on the invention, it is possible to provide a low-VOC high solid-type hydrolyzable antifouling coating material composition with satisfactory balance between the various aspects of performance, while having minimal environmental load and minimal effects on the human body and low VOC.

Furthermore, based on the invention it is possible to provide an antifouling coating film with an excellent long-term antifouling property and excellent mechanical strength.

In addition, based on the invention it is possible to provide an antifouling base that can prevent fouling of the base surfaces of underwater structures, ship outer plates, fishing nets, fishing gear base materials and the like, for prolonged periods.

**Description of Embodiments**

Preferred embodiments of the invention will now be described in detail.

<(A) Polyester resin>

The polyester resin for an antifouling coating material of this embodiment (hereunder referred to as "(A) polyester resin") comprises a compound with the structure represented by the following formula (1).

[Chemical Formula 2]

$$R^1(O\text{-}CO\text{-}R^2\text{-}CO\text{-}O\text{-}R^3\text{-}O\text{-}CO\text{-}R^4\text{-}CO\text{-}OH)_n \ldots \qquad (1)$$

[In formula (1), $R^1$ is selected from among C3-24 trivalent or tetravalent hydrocarbon groups, $R^2$ and $R^3$ are selected from among C2-34 divalent hydrocarbon groups, $R^4$ is selected from among C3-24 divalent alicyclic hydrocarbon groups, and n represents an integer of 3 or 4.]

$R^1$ is a trivalent or tetravalent hydrocarbon group. There is no particular restriction on the number of carbon atoms, but it is preferably 3 to 24 and more preferably 3 to 8, in consideration of ease of synthesis and availability of starting materials. The compound may also have a substituent such as sulfonic acid group.

$R^2$ and $R^3$ are not particularly restricted, but divalent hydrocarbon groups with 2 to 34 carbon atoms are preferred, and 2 to 8 carbon atoms are more preferred, in consideration of ease of synthesis and availability of starting materials. The compound may also have a substituent such as sulfonic acid group. Also, the n $R^2$ groups and n $R^3$ groups may be the same or different.

The $R^4$ group is a divalent alicyclic hydrocarbon group. There is no particular restriction on the number of carbon atoms, but it is preferably 3 to 24, more preferably 3 to 12 and even more preferably 6 to 7, in consideration of ease of synthesis and availability of starting materials. The compound may also have a substituent such as sulfonic acid group. The n $R^4$ groups may be the same or different.

The number n is 3 or 4, and is preferably 3 from the viewpoint of resin viscosity.

The polyester resin of this embodiment is obtained by reacting a (a) trihydric or greater alcohol (hereunder referred to as "component (a)"), a (b) dibasic acid or its anhydride (hereunder referred to as "component (b)") and a (c) divalent alcohol (hereunder referred to as "component (c)"), and then further reacting an (d) alicyclic dibasic acid or its anhydride (hereunder referred to as "component (d)"). This yields a polyester resin including a compound having the structure represented by formula (1) above.

The $R^1$ group in formula (1) derives from component (a), $R^2$ derives from component (b), $R^3$ derives from component (c) and $R^4$ derives from component (d). Also, by conducting reaction with component (d) after components (a) to (c) have been reacted in the first stage, it is possible to obtain a polyester resin having an alicyclic structure derived from component (d) on the end, which structure is presumed to increase rosin compatibility.

For synthesis using components (a) to (c) in the first stage (first step), the (c) divalent alcohol is added in a greater amount than necessary to produce the desired polyester polyol structure, and preferably the process is controlled for a theoretical solid portion hydroxyl value in a range of $\pm 12$ mgKOH/g, as derived from this structure, and reaction is conducted to an acid value of 1 mgKOH/g or lower. If the hydroxyl value is within this range, it will prevent the compound from having a high molecular weight and will allow resin viscosity increase to be inhibited, so that a polyester resin suitable for a low VOC, high solid hydrolyzable antifouling coating material composition can be obtained. Also, if the acid value is 1 mgKOH/g or lower, there will be less unreacted component (b) and reduced clouding of the resin solution. Furthermore, addition reaction with component (d) in the second stage will be facilitated, and it will be easier to obtain rosin compatibility.

Also, the reaction temperature for component (d) in the second stage (second step) is preferably 100°C to 140°C. If the temperature is no higher than 140°C, it will be possible to inhibit production of polyesters with structures other than formula (1), by esterification reaction that is not based simply on addition reaction of component (d). On the other hand, if the temperature is 100°C or higher, the reaction of component (d) will proceed more readily and synthesis will be possible within a short period of time.

The (a) trihydric or greater alcohol may be an alcohol having 3 or more hydroxyl groups in the molecule, examples of which include polyfunctional polyhydroxy compounds such as glycerin, trimethylolethane, trimethylolpropane, trimethylolbutane, hexanetriol and pentaerythritol. The number of carbon atoms is preferably 3-24 and more preferably 3-8. From the viewpoint of material cost, glycerin or trimethylolpropane is preferred.

The (b) dibasic acid or its anhydride is an acid with two or more ionizable hydrogen atoms in the molecule, or an anhydride thereof, examples of which include aliphatic dibasic acids, alicyclic dibasic acids, aromatic dibasic acids and their anhydrides. Specific examples for the aliphatic dibasic acid or its anhydride include malonic acid, maleic acid, fumaric acid, glutaric acid, succinic acid, adipic acid, pimelic acid, suberic acid, azelaic acid, sebacic acid, 1,9-nonamethylenedicarboxylic acid, 1,10-decamethylenedicarboxylic acid, 1,11-undecamethylenedicarboxylic acid and 1,12-dodecamethylenedicarboxylic acid, and their anhydrides. Specific examples for the alicyclic dibasic acid or its anhydride include 1,2-cyclohexanedicarboxylic acid, 1,3-cyclohexanedicarboxylic acid, 1,4-cyclohexanedicarboxylic acid, 1,4-decahydronaphthalenedicarboxylic acid, 1,5-decahydronaphthalenedicarboxylic acid, 2,6-decahydronaphthalenedicarboxylic acid and 2,7-decahydronaphthalenedicarboxylic acid, and their anhydrides. Further, specific examples for the aromatic dibasic acid or its anhydride include orthophthalic acid, isophthalic acid, terephthalic acid, naphthalenedicarboxylic acid, anthracenedicarboxylic acid, dimer acid, hydrogenated dimer acid and phenanthrenedicarboxylic acid, as well as their anhydrides. These may naturally be used in various derivative forms (for example, dimethyl carboxylate ester or sodium-5-sulfoisophthalic acid), and two or more different ones may also be used as mixtures. The number of carbon atoms is preferably 2-34 and more preferably 2-8. From the viewpoint of curability of the coating film there are preferred alicyclic dibasic acids and aromatic dibasic acids, which are dibasic acids having ring structures, as well as their anhydrides, with phthalic anhydride being more preferred.

The (c) divalent alcohol is an alcohol having two hydroxyl groups in the molecule. Specific examples include ethylene glycol, 1,2-propylene glycol, 1,3-propylene glycol, 1,2-butanediol, 1,3-butanediol, 2-methyl-1,3-propanediol, 1,4-butanediol, neopentyl glycol, 1,5-pentanediol, 3-methyl-1,5-pentanediol, 1,6-hexanediol, 2,2,4-trimethyl-l,3-pentanediol, 2-ethyl-1,3-hexanediol, 2-methyl-1,8-octanediol, 1,9-nonanediol, 1,10-decanediol and 1,12-octadecanediol. The number of carbon atoms is preferably 2-24, more preferably 2-12 and even more preferably 2-8. From the viewpoint of solubility of the synthesized ester, a branched alkylene glycol is preferred. Propylene glycol is preferred in consideration of availability of starting materials.

The (d) alicyclic dibasic acid or its anhydride is an acid having an alicyclic structure and two ionizable hydrogen atoms in the molecule, or an anhydride thereof. Specific examples include 1,2-cyclohexanedicarboxylic acid, 1,3-cyclohexanedicarboxylic acid, 1,4-cyclohexanedicarboxylic acid, 1,4-decahydronaphthalenedicarboxylic acid, 1,5-decahydronaphthalenedicarboxylic acid, 2,6-decahydronaphthalenedicarboxylic acid and 2,7-decahydronaphthalenedicarboxylic acid, and their acid anhydrides. The number of carbon atoms is preferably 3-24, more preferably 3-12 and even more preferably 3-8. Hexahydrophthalic anhydride is preferred from the viewpoint of ease of synthesis.

There are no particular restrictions on the mixing proportions of the components, but component (b) is preferably used at 0.5 to 8.0 with respect to 1 as component (a) as molar ratio in consideration of coating film flexibility, and more preferably 2 to 4 from the viewpoint of coating material viscosity. Also, component (c) is preferably used at 0.5 to 8 with respect to 1 as component (a), and more preferably at 2 to 4 from the viewpoint of coating material viscosity. Furthermore, component (d) is preferably used at 1 to 5 with respect to 1 as component (a), and more preferably at 2 to 4 from the viewpoint of curability of the coating material and compatibility with the rosin resin used for pigment dispersion.

The weight-average molecular weight of the (A) polyester resin is preferably no greater than 8000, more preferably no greater than 4000 and even more preferably no greater than 2000. If the weight-average molecular weight is no greater than 2000, excessive increase in viscosity of the final coating material will be prevented and it will be possible to reduce the amount of VOC necessary for dilution with solvent to a coatable viscosity.

The weight-average molecular weight and number-average molecular weight of the (A) polyester resin are the values obtained by measurement by gel permeation chromatography (GPC) and calculation using a standard polystyrene calibration curve. The GPC conditions for molecular weight measurement were as follows.

<GPC conditions>

Pump: L-6200 by Hitachi, Co., Ltd.
Columns: Gel packs GL-420, GL-430 and GL-440 by Hitachi Chemical Co., Ltd.
Eluent: tetrahydrofuran

The acid value of the solid portion of the (A) polyester resin is preferably 50 to 250 mgKOH/g, more preferably 80 to 200 mgKOH/g and even more preferably 100 to 150 mgKOH/g. If the acid value of the solid portion is at least 50 mgKOH/g, reaction with the polyvalent metal compound will readily proceed and the drying property will be superior, while an acid value of no greater than 250 mgKOH/g will prevent reaction with the polyvalent metal compound during mixing, that results in high viscosity of the coating material, so that day-to-day viscosity increase can be prevented. The acid value of the solid portion of the polyester resin of this embodiment may be measured by titration using potassium hydroxide (KOH).

The hydroxyl value of the solid portion of the (A) polyester resin is preferably no greater than 100 mgKOH/g, more preferably no greater than 50 mgKOH/g, even more preferably no greater than 20 mgKOH/g and most preferably no greater than 10 mgKOH/g. By limiting the hydroxyl value of the solid portion to no greater than 100 mgKOH/g, it will be easier to obtain compatibility with the rosin and petroleum resin used in the coating material, the coating film appearance will be superior and the water resistance of the coating film will be excellent

To obtain a solid portion acid value for the (A) polyester resin within the range specified above, there may be applied a method of introducing a carboxylic acid at the ends using a dibasic acid, or a method of introducing a carboxylic acid at the ends using a polybasic acid. More specifically, the acid value of the solid portion can also be modified to within the aforementioned range by adjusting the contents for the first step, adjusting the extent of esterification reaction or adding a polybasic acid anhydride (such as trimellitic anhydride) after the first step. So long as it is after the first step, the addition reaction of the polybasic acid anhydride may be before the second step, during the second step or after the second step, and it may also be used in combination with an alicyclic dibasic anhydride used in the second step. A method of introducing a polybasic acid by the first step may also be employed, but introduction by addition after polyester synthesis allows easier control of the reaction with less gelling and viscosity increase.

Low molecularization of the polyester for viscosity reduction will tend to increase the hydroxyl groups, and in such cases a monocarboxylic acid such as benzoic acid may be used for reaction with the hydroxyl groups during the first step, to adjust the hydroxyl value.

The (A) polyester resin may be used as a solution dissolved in a solvent (hereunder also referred to as "(A) polyester resin solution"). Examples for the solvent to be used include the same ones provided as examples for the (F) solvent for the antifouling coating material composition described hereunder. The (A) polyester resin solution may also comprise a non-reacting starting material.

The viscosity of the (A) polyester resin solution at 25°C is preferably no higher than 3000 mPa·s, more preferably no higher than 2000 mPa·s and even more preferably no higher than 1000 mPa·s. If the viscosity is no higher than 3000 mPa·s, it will be easier to prepare an antifouling coating material composition that is coatable even when the volatile organic compound (VOC) content is 400 g/L or lower.

[Antifouling coating material composition]

The antifouling coating material composition of this embodiment comprises the aforementioned (A) polyester resin. The other components that may be included in the antifouling coating material composition will now be described.

<(B) Polyvalent metal compound>

The antifouling coating material composition of this embodiment may further comprise a polyvalent metal compound.

The polyvalent metal compound functions by reacting with the carboxyl groups of the (A) polyester resin.

Reaction between the (A) polyester resin and the polyvalent metal compound can form a metal salt crosslinked structure (for example, -COO$^-$ ·· M$^{2+}$ ·· $^-$OOC-) by a -COO$^-$ group as the residue after dissociation of the hydrogen ion from the carboxyl group of the (A) polyester resin and the metal ion M$^{x+}$ of the polyvalent metal compound (where x is the valency of the metal element M).

The metal salt crosslinked structure is readily hydrolyzed, allowing stable hydrolysis to be exhibited. The (A) polyester resin of this embodiment has excellent reactivity with polyvalent metal compounds, and also excellent compatibility with various resins. Because the (A) polyester resin of this embodiment has excellent reactivity with polyvalent metal compounds, it rapidly forms stable metal salts. Furthermore, since the (A) polyester resin of this embodiment has excellent compatibility with combined resins, there are no storage stability problems such as viscosity increase or formation of precipitates or coarse grains, and the coating film can exhibit grinding and cleaning properties for prolonged periods. Consequently, the (A) polyester resin of this embodiment can yield a coating film with excellent long-term antifouling properties and excellent flexibility. If the polyester resin has an appropriate molecular weight, (a weight-average molecular weight of no greater than 10,000 for this embodiment), it will be possible to obtain a practical coating material viscosity even when the VOC value is set to 400 g/L or lower.

Polyvalent metals include copper, zinc, magnesium, calcium, germanium, aluminum, cobalt, iron and titanium, among which zinc, copper, germanium, magnesium, calcium, cobalt and aluminum are preferred, and zinc is especially preferred. Polyvalent metal compounds include inorganic acid salts of polyvalent metal such as oxides, hydroxides, halides, carbonates and sulfates, or their organic acid salts such as acetates or salicylates, with oxides, hydroxides and carbonates being preferred, and oxides and hydroxides being more preferred.

Preferred polyvalent metal compounds are oxides of one or more polyvalent metals selected from the group consisting of zinc, copper, germanium, magnesium, calcium and cobalt, with zinc oxide being especially preferred from the viewpoint of high reactivity.

Zinc oxide may be used in forms with various different particle diameters. Using zinc oxide fine particles is preferred over using zinc oxide with large particle diameters, because reaction between the carboxyl groups of (A) polyester resin and the zinc oxide will be accelerated, while the coating film hardness will also be increased in a shorter period of time and damage resistance of the coating film will be exhibited early.

The polyvalent metal compound content in the antifouling coating material composition of this embodiment is an amount of preferably 10 to 700 parts by mass and even more preferably 50 to 500 parts by mass with respect to 100 parts by mass of the (A) polyester resin solution. If it is less than 10 parts by mass, poor curability and poor coated film strength will tend to result. If it is greater than 700 parts by mass, the coating properties such as crack resistance will tend to be poor.

<(C) Rosin and rosin derivative>

The antifouling coating material composition of this embodiment may further comprise a rosin and/or a rosin derivative. Rosins include gum rosin, wood rosin and tall oil rosin. Rosin derivatives include hydrogenated rosins, polymerized rosins, maleinized rosins, aldehyde-modified rosins, rosin metal salts and rosin amines. The rosin and/or its derivative used may be a single type or a mixture of two or more types.

The content of the rosin and/or rosin derivative in the antifouling coating material composition of this embodiment is preferably 0.5 to 300 parts by mass, even more preferably 0.5 to 250 parts by mass and most preferably 0.5 to 200 parts by mass, with respect to 100 parts by mass of the (A) polyester resin solution. At less than 0.5 part by mass the coating material viscosity will tend to increase, and at greater than 300 parts by mass the physical properties may be impaired, including cracking, and the like.

<(D) Antifouling agent>

The antifouling coating material composition of this embodiment may further comprise an antifouling agent (hereunder also referred to as "(D) antifouling agent"). The (D) antifouling agent may be either an organic or an inorganic antifouling agent, and cuprous oxide, metal pyrithiones such as copper pyrithione (Copper Omadine) and zinc pyrithione (Zinc Omadine), or 4,5-dichloro-2-n-octyl-4-isothiazolin-3-one, 2-methylthio-4-t-butylamino-6-cyclopropylamino-s-triazine, 2-(p-parachlorophenyl)-3-cyano-4-bromo-5-trifluoromethylpyrrole, medetomidine, NN'-dimethyl-N'-tolyl-(N-fluorodichloromethylthio)sulfamide, pyridine-triphenylborane and the like may be used.

In the antifouling coating material composition of this embodiment, the (D) antifouling agent is preferably used in an amount of 10 to 1000 parts by mass and more preferably 100 to 800 parts by mass with respect to 100 parts by mass of the (A) polyester resin solution.

Also, cuprous oxide exhibits stable antifouling performance, from the viewpoint of its antifouling property against a wide range of organisms, and it exhibits its antifouling property in antifouling coating films in a variety of sea regions.

In the antifouling coating material composition of this embodiment, the cuprous oxide is used at 50 to 1000 parts by mass and more preferably 50 to 800 parts by mass with respect to 100 parts by mass of the polyester resin.

<(E) Other additives>

The antifouling coating material composition of this embodiment may also comprise at least one type of additive selected from the group consisting of plasticizers (e1), extender pigments (excluding polyvalent metal compounds) (e2), pigment dispersants (e3), color pigments (e4), anti-running agents (e5), anti-settling agents (e6) and dehydrating agents (e7) (hereunder referred to collectively as "additive (E)").

The plasticizers (e1), extender pigments (e2) (excluding polyvalent metal compounds), pigment dispersants (e3), color pigments (e4), anti-running agents (e5), anti-settling agents (e6) and dehydrating agents (e7) will now be explained in detail.

(e1) Plasticizers

Plasticizers (e1) include chlorinated paraffins, petroleum resins, ketone resins, TCP (tricresyl phosphate), polyvinyl ethyl ethers and dialkyl phthalates. The antifouling coating material composition of this embodiment preferably includes a plasticizer (e1) from the viewpoint of increasing the crack resistance of the coating film (antifouling coating film) formed from the antifouling coating material composition. As chlorinated paraffins there may be used straight-chain or branched ones that are either liquid or solid (powder) at room temperature, but the average number of carbons is usually preferred to be 8 to 30 and more preferably 10 to 26, and preferably the number-average molecular weight is generally 200-1200 and more preferably 300 to 1100, the viscosity is generally at least 1 (poise/25°C) and preferably 1.2 or greater (poise/25°C), and the specific gravity is generally 1.05 to 1.80/25°C and more preferably 1.10 to 1.70/25°C. Using a chlorinated paraffin with this specified number of carbon atoms will allow a coating film with low cracking and peeling to be obtained from the resulting antifouling coating material composition. If the chlorinated paraffin has less than 8 carbon atoms the effect of inhibiting cracking may be insufficient, while if it has more than 30 carbon atoms the expendability (regenerability) of the obtained coating film surface may be poor and the antifouling property inferior. The degree of chlorination (chlorine content) of the chlorinated paraffin is usually preferred to be 35% to 75% and more preferably 35% to 65%. Using a chlorinated paraffin with this specified degree of chlorination will allow a coating film with low cracking and peeling to be obtained from the resulting antifouling coating material composition. Such chlorinated paraffins include TOYOPARAX 150 and TOYOPARAX A-70, by Tosoh Corp. As petroleum resins there may be used, specifically, C5, C9, styrene-based and dicyclopentadiene-based compounds, as well as their hydrogenated forms, with commercial products including QUINTONE 1500 and QUINTONE 1700 by Zeon Corp. Preferred among these are chlorinated paraffins, petroleum resins and ketone resins. These plasticizers may be used either alone or in combinations of two or more.

The plasticizer (e1) is preferably included at 0.1 to 300 parts by mass, more preferably 0.1 to 200 parts by mass and most preferably 0.1 to 150 parts by mass, with respect to 100 parts by mass of the (A) polyester resin solution.

(e2) Extender pigments

Extender pigments (e2) (excluding polyvalent metal compounds) include talc, silica, mica, clay, potassium feldspar, and calcium carbonate, kaolin and alumina white that are also used as anti-settling agents and white carbon, aluminum hydroxide, magnesium carbonate, barium carbonate and barium sulfate that are also used as delustering agents, among which extender pigments selected from the group consisting of talc, silica, mica, clay, calcium carbonate, kaolin, barium sulfate and potassium feldspar are preferred. Extender pigments are pigments with a low refractive index that when kneaded with oils or varnishes are transparent and do not hide coated surfaces, and an extender pigment (e2) is preferably added to the antifouling coating material composition of this embodiment from the viewpoint of improving the coating properties, including crack resistance.

The extender pigment (e2) is preferably included at 0.1 to 500 parts by mass and more preferably 50 to 300 parts by mass with respect to 100 parts by mass of the (A) polyester resin solution.

(e3) Pigment dispersants

As pigment dispersants (e3) there may be used conventionally known organic and inorganic dispersing agents. Organic pigment dispersants include aliphatic amines and organic acids (DUOMEEN TDO by Lion Corp., and DISPERBYK101 by BYK Chemie).

The pigment dispersant (e3) is preferably included at 0.01 to 100 parts by mass and more preferably 0.01 to 50 parts by mass with respect to 100 parts by mass of the (A) polyester resin solution.

(e4) Color pigments

As color pigments (e4) there may be used conventionally known organic and inorganic pigments. Organic pigments include carbon black, naphthol red, phthalocyanine blue and the like. Examples of inorganic pigments include bengala (iron oxide red), baryta powder, titanium white and yellow iron oxide. Various coloring agents such as dyes may also be added. The antifouling coating material composition of this embodiment preferably contains a color pigment (e4) from the viewpoint of discretionary adjustment of the color tone of the antifouling coating film obtained from the composition.

The color pigment (e4) is preferably included at 0.01 to 100 parts by mass and more preferably 0.01 to 10 parts by mass with respect to 100 parts by mass of the (A) polyester resin solution.

(e5) Anti-running agents (also known as "anti-sagging agents")

Anti-running agents (e5) include amide waxes, hydrogenated castor oil waxes and polyamide waxes, and mixtures of both, and synthetic fine silica powder, with polyamide waxes and synthetic fine silica powder being preferred.

Commercial products include DISPARLON A630-20XC by Kusumoto Chemicals, Ltd., and ASAT-250F by Itoh Oil Chemicals Co., Ltd. The antifouling coating material composition of this embodiment preferably contains an anti-running agent (e5) from the viewpoint of allowing adjustment of the anti-running property during coating.

The anti-running agent (e5) is preferably included at 0.1 to 100 parts by mass and more preferably 0.1 to 50 parts by mass with respect to 100 parts by mass of the (A) polyester resin solution.

(e6) Anti-settling agents

Anti-settling agents (e6) include organic clay-based Al, Ca and Zn amine salts, polyethylene waxes and polyethylene oxide-based waxes, with polyethylene oxide-based waxes being preferred. Commercial products include DISPARLON 4200-20X by Kusumoto Chemicals, Ltd. The antifouling coating material composition of this embodiment preferably contains an anti-settling agent (e6) from the viewpoint of preventing deposition of the solvent insolubles during the storage period and improving the stirrability.

The anti-settling agent (e6) is preferably included at 0.1 to 100 parts by mass and more preferably 0.1 to 50 parts by mass with respect to 100 parts by mass of the (A) polyester resin solution.

(e7) Dehydrating agent

The dehydrating agent (e7) used may be a publicly known one, such as gypsum or ethyl silicate. Commercial products include gypsum such as "Calcined Plaster FT-2" by Noritake Co., Ltd., and ethyl silicates such as Ethyl Silicate 28 by Colcoat Co., Ltd.

The dehydrating agent (e7) is preferably included at 0.01 to 100 parts by mass and more preferably 0.01 to 50 parts by mass with respect to 100 parts by mass of the (A) polyester resin solution.

<(F) Solvent>

The antifouling coating material composition of this embodiment may further comprise a solvent (F). Publicly known solvents with a wide range of boiling points may be used as the solvent (F), and specifically there may be mentioned aliphatic solvents such as terpene; aromatic solvents such as toluene, xylene; alcohol-based solvents such as isopropyl alcohol, n-butyl alcohol and isobutyl alcohol; esteric solvents such as ethyl acetate and butyl acetate; ketone-based solvents such as methyl ethyl ketone, methyl isobutyl ketone (MIBK) and methyl amyl ketone; and ether-based or ether ester-based solvents such as ethyleneglycol monomethyl ether, ethyleneglycol monobutyl ether, propyleneglycol monomethyl ether and propyleneglycol monomethyl ether acetate; among which xylene, methyl isobutyl ketone and propyleneglycol monomethyl ether are preferred. These solvents may be used as single compounds or as combinations of two or more compounds.

The volatile organic compound (VOC) content of the antifouling coating material composition of this embodiment is preferably no greater than 400 g/L and more preferably 100 to 350 g/L. A VOC content of no greater than 400 g/L can minimize environmental load and effects on the human body. The VOC is the value determined under the measuring conditions explained in the Examples section.

In the antifouling coating material composition of this embodiment, the viscosity is preferably 5 to 20 dPa·s, and for coating manageability (spray manageability and running resistance), it is more preferably 8 to 20 dPa·s and even more preferably 10 to 20 dPa·s.

The antifouling coating material composition of this embodiment can be produced by stirring and mixing the aforementioned components that have been previously prepared. The stirring and mixing may be accomplished using a known mixer/stirrer such as a high-speed dispersion mixer, sand grinding mill, basket mill, ball mill, triple roll, Ross mixer, planetary mixer, universal Shinagawa mixer or the like.

[Antifouling coating film, antifouling base, and method for producing antifouling base]

The antifouling coating film of this embodiment is obtained by curing the antifouling coating material composition of the embodiment described above. The antifouling base of this embodiment is obtained by coating or impregnating a base with the antifouling coating material composition of this embodiment, and curing the coating composition that has been coated onto or impregnated into the base, to form an antifouling coating film on the base. Also, the method for producing an antifouling base according to this embodiment is one in which a base is coated or impregnated with the antifouling coating material composition of this embodiment, and the coating composition that has been coated onto the base or the coating composition that has been impregnated into the base is cured, to form an antifouling coating film on the base.

There are no particular restrictions on the base material that is the target of the method of preventing fouling, but it is preferably an underwater structure, ship, fishing net or fishing gear item. For example, the antifouling coating material composition may be applied once or several times by a common method onto the surface of underwater structures such as plumbing drains in thermal power or nuclear power plants, sludge diffusion-blocking films for various ocean civil engineering works such as coastal roads, undersea tunnels, harbor facilities, canals/water channels or the like, or molded articles of ships, fishery materials (for example, ropes, fishing nets, fishing gears, floats and buoys) and the like, to obtain antifouling coating film-coated ships or underwater structures with excellent antifouling properties, allowing sustained release of antifouling agent components for prolonged periods, and exhibiting excellent crack resistance with suitable flexibility even when thickly coated.

That is, an antifouling coating film obtained by coating and curing the antifouling coating material composition of this embodiment on the surface of a molded article exhibits excellent antifouling properties that allow long-term and continuous prevention of adhesion of aquatic creatures such as sea lettuce, barnacles, green laver, serpula, oysters and *Bugula neritina.* Satisfactory adhesion occurs especially for material surfaces when the materials of ships and the like are FRP, steel, wood or aluminum alloy. In addition, coating the antifouling coating material composition of this embodiment onto the surface of an underwater structure can prevent adhesion of marine organisms and maintain the function of the structure for prolonged periods, while coating onto a fishing net can prevent obstruction of the fishing net mesh and lower the risk of environmental pollution.

The antifouling coating material composition of this embodiment may be coated directly onto a fishing net, or it may be coated onto the surface of a ship or underwater structure whose base layer material has already been coated with a rust-preventive agent or primer. Furthermore, the antifouling coating material composition of this embodiment may be applied as an overcoat for repair on the surface of a ship, especially an FRP ship, or an underwater structure that has already been coated with a conventional antifouling coating material or that has already been coated with an antifouling coating material composition according to this embodiment. There are no particular restrictions on the thickness of the antifouling coating film formed in this manner on the surface of a ship, underwater structure or the like, and it may be about 30-250 $\mu$m/application, for example.

The antifouling coating film of this embodiment, obtained as described above, is the cured product of the antifouling coating material composition of this embodiment, and therefore the risk of environmental pollution is low and it exhibits an excellent long-term antifouling property against adhesion of organisms onto a broad range of ships and underwater structures.

As explained above, this embodiment can provide a low-VOC hydrolyzable antifouling coating material composition capable of forming an antifouling coating film having low environmental load and excellent antifouling properties, and superior uniform expendability of the coated film, whereby the coating film undergoes uniform wear at a constant rate over long periods, and excellent maintenance of long-term antifouling performance of the coated film, allowing superior antifouling performance to be maintained for prolonged periods and making it suitable for sea going vessels, as well as an antifouling coating film, and ships, underwater structures, fishing gear or fishing nets coated with the antifouling coating film.

**Examples**

The present invention will now be explained in greater detail based on examples and comparative examples, with the understanding that these examples are in no way limitative on the invention. The "parts" and "%" values in the examples and comparative examples refer to "parts by mass" and "mass%", respectively.

<Production of (A) polyester resin>

(Example 1: Production of polyester resin solution (a-1))

Into a reactor equipped with a stirrer, condenser and thermometer there were charged 92 parts of glycerin as a (a) trihydric or greater alcohol, 444 parts of phthalic anhydride as a (b) dibasic acid or its anhydride, 228 parts of propylene glycol as a (c) divalent alcohol and 0.05 part of tetrabutyl titanate as a catalyst, and esterification reaction was conducted from 140°C to 190°C over a period of 4 hours. The system interior was then gradually reduced in pressure to 100 mmHg over a period of 2 hours, and polycondensation reaction was conducted at 190°C for 20 hours. During the reaction, the generated water was removed by reflux dewatering, the acid value was measured by KOH titration and the hydroxyl value was measured by acetylation, the mixture was cooled to 120°C when the acid value of the solid portion fell below 1 mgKOH/g, and then 439 parts of hexahydrophthalic anhydride was charged in as a (d) alicyclic dibasic acid or its anhydride for reaction for 2 hours. After cooling the reaction mixture, it was diluted with n-butyl acetate to obtain polyester resin solution (a-1) having a nonvolatile content of 65%, an acid value of 88 mgKOH/g (135 mgKOH/g as solid portion), a hydroxyl value of 5 mgKOH/g (7.7 mgKOH/g as solid portion), a viscosity of 1000 mPa·s and a weight-average molecular weight of 1,000.

(Examples 2 to 7 and 26 to 31: Production of polyester resin solutions (a-2) to (a-7) and (a-13) to (a-18))

Polyester resin solutions (a-2) to (a-7) and (a-13) to (a-18) were obtained in the same manner as Production Example 1, except for changing the types and amounts of starting materials as shown in Table 1.

(Comparative Examples 1 to 5)

Polyester resin solutions (a-8) to (a-12) were obtained in the same manner as Production Example 1, except for changing the types and amounts of starting materials as shown in Table 2.

(Comparative Example 6: Production of polyester resin solution (b-1))

After mixing 280 parts of isophthalic acid, 430 parts of sebacic acid, 12 parts of trimethylolpropane, 70 parts of propylene glycol, 238 parts of neopentyl glycol, 90 parts of ethylene glycol and 165 parts of benzoic acid in a 2 L four-necked flask, the mixture was reacted at 220°C for 6 hours in the presence of nitrogen gas (esterification reaction). The water generated was removed by reflux dewatering and, measuring the acid value by KOH titration and the hydroxyl value by the acetylation method, the reaction was suspended when the acid value of the solid portion reached 43 mgKOH/g and the hydroxyl value of the solid portion reached 60 mgKOH/g. The mixture was then cooled to 170°C, 178 parts of trimellitic anhydride was added, the mixture was thermally insulated for 2 hours, addition reaction was conducted, and the reaction was suspended when the acid value of the solid portion reached 108 mgKOH/g and the hydroxyl value of the solid portion reached 10 mgKOH/g. After cooling, it was diluted with methyl isobutyl ketone, to obtain polyester resin solution (b-1) having a heating residue of 65.0%, an acid value of 70 mgKOH/g (108 mgKOH/g as solid portion), a hydroxyl value of 7 mgKOH/g (10 mgKOH/g as solid portion), a viscosity of 240 mPa·s and a weight-average molecular weight of 1,790.

<Evaluation of resin properties>

The following evaluation was conducted for polyester resin solutions (a-1) to (a-7) and (a-13) to (a-18) obtained in Examples 1 to 7 and 26 to 31, and polyester resin solutions (a-8) to (a-12) and (b-1) obtained in Comparative Examples 1 to 6. The obtained results are shown in Tables 1 to 3. (1) GPC;

The weight-average molecular weight and number-average molecular weight were measured by GPC using a standard polystyrene calibration curve, under the following conditions.

(GPC measuring conditions)

    Apparatus: L-6200 by Hitachi Co., Ltd.
    Columns: Gel packs GL-420, GL-430 and GL-440 by Hitachi Chemical Co., Ltd.
    Eluent: THF
    Flow rate: 2.0 ml/min

(2) Heating residue (mass NV);

After weighing out 1.5 g of polyester resin solution into a flat-bottom dish, a wire of known mass was used for even spreading and the solution was dried at 135°C for 1 hour, after which the masses of the residue and wire were measured and the heating residue (mass%) was calculated.

The term "heating residue" has the same definition as "nonvolatile content" mentioned above.

(3) Acid value;

After weighing out the polyester resin (solid portion or solution) into an Erlenmeyer flask, approximately 30 ml of a solvent (isopropyl alcohol/toluene = 1/2 (volume ratio)) was added to dissolve it. Next, about 2-3 drops of an indicator (1% phenolphthalein/ethyl alcohol solution) was added and titration was performed with a 0.1 mol/l potassium hydroxide solution (alcoholic), with the end point defined as disappearance of faint crimson color, after which calculation was performed by the following formula.

$$\text{Acid value (mgKOH/g)} = F \times V/S$$

F: Coefficient of 0.1 mol/l potassium hydroxide solution (reagent factor $\times$ 5.61)
V: Titer of 0.1 mol/l potassium hydroxide solution (ml)
S: Sampling amount (g)

(4) Hydroxyl value;

The polyester resin (solid portion or solution) was weighed out into an Erlenmeyer flask, and 5 ml of an acetylating agent (acetic anhydride 20 g, with pyridine added to 100 ml) was precisely added thereto to dissolve it. After warming for 30 minutes on a hot plate heated to approximately 120°C, 1.2 ml of purified water was added, and the mixture was gently shaken and again warmed for 5 minutes. After cooling to room temperature, about 20 ml of a solvent (isopropyl alcohol/toluene = 1/2 (volume ratio)) and about 2-3 drops of an indicator (1% phenolphthalein/ethyl alcohol solution) were added and titration was performed with a 0.5 mol/l potassium hydroxide solution (alcoholic), with the end point defined as disappearance of faint crimson color, after which calculation was performed by the following formula. A blank test was conducted in parallel with this test, and calculation was performed by the following formula.

$$\text{Hydroxyl value (mgKOH/g)} = (A\text{-}B) \times F/S\text{+}C$$

A: Titer of 0.5 mol/l potassium hydroxide solution (ml) for blank test
B: Titer of 0.5 mol/l potassium hydroxide solution (ml) for main test
F: Coefficient of 0.5 mol/l potassium hydroxide solution (reagent factor $\times$ 28.05)
S: Sampling amount (g)
C: Acid value of sample (mgKOH/g)

(5) Viscosity;

The viscosity of the polyester resin solution was measured using a Brookfield viscometer at 25°C.

(Viscosity measuring conditions)

Temperature: 25°C
Cone shape: No.2 rotor
Sample volume: Approximately 200 ml
Rotational speed: 30 rpm
Time from initial rotation to measurement: 3 minutes

(6) Evaluation of rosin compatibility;

After mixing the polyester resin solution with WW rosin resin in a solid ratio of 1:1, the mixture was coated onto a glass plate with a film applicator (clearance: 0.3 mm) and dried at 23°C for 24 hours, after which the outer appearance was observed. In Tables 1 to 3, "A" represents compatibility and "B" represents no compatibility (separation).

(7) Coating film curability;

A mixture of 50 parts of the polyester resin solution and 25 parts of zinc oxide was dispersed for 30 minutes using a pigment disperser (paint shaker). The coating material obtained in this manner was used for coating onto a glass plate to a dry thickness of 100 $\mu$m, and the cured state of the coating film after standing at 25°C for 24 hours was evaluated by finger contact. In Tables 1 to 3, "VG" means no tack and no warping of the coating film, "G" means no tack but some warping of the coating film, and "P" means tack.

[Table 1]

| | | | Example 1 | Example 2 | Example 3 | Example 4 | Example 5 | Example 6 | Example 7 | Example 26 | Example 27 | Example 28 | Example 29 | Example 30 | Example 31 |
|---|---|---|---|---|---|---|---|---|---|---|---|---|---|---|---|
| | | | Polyester resin solution (a-1) | Polyester resin solution (a-2) | Polyester resin solution (a-3) | Polyester resin solution (a-4) | Polyester resin solution (a-5) | Polyester resin solution (a-6) | Polyester resin solution (a-7) | Polyester resin solution (a-13) | Polyester resin solution (a-14) | Polyester resin solution (a-15) | Polyester resin solution (a-16) | Polyester resin solution (a-17) | Polyester resin solution (a-18) |
| Monomer composition | Component (a) | Glycerin | 92 | 92 | 92 | 92 | 92 | 92 | - | - | 92 | 92 | 92 | 92 | 92 |
| | | Trimethylolpropane | - | - | - | - | - | - | 134 | - | - | - | - | - | - |
| | | Pentaerythritol | - | - | - | - | - | - | - | 136 | - | - | - | - | - |
| | Component (b) | Hexahydrophthalic anhydride | - | - | - | - | 462 | - | - | - | - | - | - | - | - |
| | | Phthalic anhydride | 444 | - | - | 444 | - | 444 | 444 | 592 | - | - | 444 | 444 | 444 |
| | | Isophthalic acid | - | 498 | - | - | - | - | - | - | - | - | - | - | - |
| | | Terephthalic acid | - | - | - | - | - | - | - | - | 498 | - | - | - | - |
| | | 1,4-Cyclohexanedi-carboxylic acid | - | - | - | - | - | - | - | - | - | 516 | - | - | - |
| | | Adipic acid | - | - | 438 | - | - | - | - | - | - | - | - | - | - |
| | Component (c) | Ethylene glycol | - | - | - | - | - | - | - | - | - | - | 186 | - | - |
| | | Propylene glycol | 228 | 228 | 228 | - | 228 | 228 | 228 | 304 | 228 | 228 | - | - | - |
| | | 1,3-Butanediol | - | - | - | 270 | - | - | - | - | - | - | - | - | - |
| | | Neopentyl glycol | - | - | - | - | - | - | - | | - | - | - | 312 | - |
| | | 1,4-Cyclohexanedimethanol | - | - | - | - | - | - | - | - | - | - | - | - | 432 |
| | Component nt (d) | Hexahydrophthalic anhydride | 439 | 439 | 439 | 439 | 439 | - | 439 | 439 | 439 | 439 | **439** | 439 | 439 |
| | | Methylhexahydrophthalic anhydride | - | - | - | - | - | 479 | - | - | - | - | - | - | - |
| Catalyst | | | 0.05 | 0.05 | 0.05 | 0.05 | 0.05 | 0.05 | 0.05 | 0.05 | 0.05 | 0.05 | 0.05 | 0.05 | 0.05 |

| | | Example 1 | Example 2 | Example 3 | Example 4 | Example 5 | Example 6 | Example 7 | Example 26 | Example 27 | Example 28 | Example 29 | Example 30 | Example 31 |
|---|---|---|---|---|---|---|---|---|---|---|---|---|---|---|
| | | Polyester resin solution (a-1) | Polyester resin solution (a-2) | Polyester resin solution (a-3) | Polyester resin solution (a-4) | Polyester resin solution (a-5) | Polyester resin solution (a-6) | Polyester resin solution (a-7) | Polyester resin solution (a-13) | Polyester resin solution (a-14) | Polyester resin solution (a-15) | Polyester resin solution (a-16) | Polyester resin solution (a-17) | Polyester resin solution (a-18) |
| Mean number of functional groups (designed value) | | 3 | 3 | 3 | 3 | 3 | 3 | 3 | 4 | 3 | 3 | 3 | 3 | 3 |
| Resin properties | Heating residue (%) | 65 | 65 | 65 | 65 | 65 | 65 | 65 | 65 | 65 | 65 | 65 | 65 | 65 |
| | Acid value (mgKOH/g) | 88 | 89 | 87 | 87 | 88 | 86 | 86 | 77 | 92 | 90 | 97 | 79 | 78 |
| | Hydroxyl value (mgKOH/g) | 5 | 5 | 6 | 5 | 6 | 5 | 5 | 35 | 5 | 6 | 7 | 10 | 9 |
| | Viscosity (mPa·s) | 1000 | 990 | 1050 | 800 | 980 | 1200 | 1000 | 2680 | 930 | 700 | 830 | 1160 | 1840 |
| | Num. average mol. wt (Mn) | 1000 | 1000 | 980 | 1050 | 1020 | 1050 | 1040 | 1150 | 1000 | 1020 | 920 | 1100 | 1230 |
| | Wt average mol. wt. (Mw) | 1680 | 1700 | 1670 | 1790 | 1720 | 1780 | 1750 | 2370 | 1750 | 1750 | 1270 | 1740 | 2060 |
| Rosin compatibility | | A | A | A | A | A | A | A | A | A | A | A | A | A |
| Coating film curability | | VG | VG | G | VG | VG | VG | VG | G | VG | G | G | VG | VG |

EP 2 873 683 B1

[Table 2]

| | | | Comp. Ex. 1 | Comp. Ex. 2 | Comp. Ex 3 | Comp. Ex 4 | Comp. Ex. 5 |
|---|---|---|---|---|---|---|---|
| | | | Polyester resin solution (a-8) | Polyester resin solution (a-9) | Polyester resin solution (a-10) | Polyester resin solution (a-11) | Polyester resin solution (a-12) |
| Monomer composition | Component (a) | Glycerin | - | 92 | 92 | 92 | 92 |
| | Component (b) | Hexahydrophthalic anhydride | - | - | - | 462 | - |
| | | Phthalic anhydride | 296 | 444 | 444 | - | 444 |
| | Component (c) | Propylene glycol | 228 | 228 | 228 | 228 | 228 |
| | Component (d) | Hexahydrophthalic anhydride | 293 | - | - | - | - |
| | Component (d') | Phthalic anhydride | - | 422 | - | 422 | 211 |
| | | Succinic anhydride | - | - | 285 | - | - |
| | | Maleic anhydride | - | - | - | - | 140 |
| Catalyst | | | 0.05 | 0.05 | 0.05 | 0.05 | 0.05 |
| Mean number of functional groups (designed | | | 2 | 3 | 3 | 3 | 3 |
| Resin properties | Heating residue (%) | | 65 | 65 | 65 | 65 | 65 |
| | Acid value (mgKOH/g) | | 87 | 90 | 103 | 87 | 91 |
| | Hydroxyl value (mgKOH/g) | | 6 | 6 | 5 | 6 | 6 |
| | Viscosity (mPa·s) | | 150 | 1500 | 900 | 1000 | 2000 |
| | Num. average mol. wt. (Mn) | | 800 | 1030 | 950 | 980 | 1000 |
| | Wt average mol. wt. (Mw) | | 1120 | 1800 | 1520 | 1750 | 1850 |
| Rosin compatibility | | | A | B | B | B | B |
| Coating film curability | | | P | VG | VG | VG | VG |

EP 2 873 683 B1

15

[Table 3]

| | | | Comp. Ex. 6 |
|---|---|---|---|
| | | | Polyester resin solution (b-1) |
| Monomer composition | Polyhydric alcohol | Trimethylolpropane | 12 |
| | | Propylene glycol | 70 |
| | | Ethylene glycol | 90 |
| | | Neopentyl glycol | 238 |
| | Polybasic acid | Isophthalic acid | 280 |
| | | Sebacic acid | 430 |
| | | Benzoic acid | 165 |
| | | Trimellitic anhydride | 178 |
| Catalyst | | | 0.05 |
| Mean number of functional groups (designed | | | 1.7 |
| Resin properties | Heating residue (%) | | 65 |
| | Acid value (mgKOH/g) | | 70 |
| | Hydroxyl value (mgKOH/g) | | 5 |
| | Viscosity (mPa·s) | | 240 |
| | Num. average mol. wt. (Mn) | | 900 |
| | Wt. average mol. wt. (Mw) | | 1790 |
| Rosin compatibility | | | A |
| Coating film curability | | | P |

<Modification of antifouling coating material composition>

(Example 8)

The antifouling coating material composition was modified in the following manner.

First, xylene (10.5 parts), methyl isobutyl ketone (2 parts), WW rosin (5.5 parts), TCP (5 parts), polyester resin solution (a-1) (8 parts), BYK-101 (0.3 part) and Ethyl Silicate 28 (0.3 part) were combined in a 1000 ml plastic container, and agitated with a paint shaker to uniform dissolution.

Next, TTK Talc (4 parts), zinc oxide (6 parts), NOVAPERM RED F5RK (0.6 part), Cuprous Oxide NC-803 (48 parts), 2-methylthio-4-t-butylamino-6-cyclopropylamino-s-triazine (2.5 parts), iron oxide red 404 (2.3 parts), Titanium White R-5N (2 parts), Calcined Plaster (1 part) and Disperlon 603-20X (2 parts) were combined, glass beads (200 parts) were added, and the mixture was dispersed for 1 hour.

This was filtered with a 80 mesh filter screen to prepare an antifouling coating material composition.

(Examples 9 to 25, Comparative Examples 7 to 23)

Antifouling coating material compositions for Examples 9 to 25 and Comparative Examples 7 to 23 were prepared in the same manner as Example 8, except that the compounding ingredients and amounts were changed as shown in Tables 4 and 5.

<Evaluation of physical properties of antifouling coating material compositions>

The physical properties of the antifouling coating material compositions of Examples 8 to 25 and Comparative Examples 7 to 23, and the coating films formed using them, were evaluated in the following manner. The obtained results are shown in Tables 6 and 7.

(1) Measurement of volatile organic compound (VOC) mass;

The volatile organic compound mass was calculated by the following formula, using the values for the coating material specific gravity and mass NV.

$$\text{VOC (g/L)} = \text{Coating material specific gravity} \times 1000 \times (100 - \text{mass NV})/100$$

(2) Specific gravity;

The mass of the antifouling coating material composition filling a specific gravity cup with an internal volume of 100 ml was measured at 25°C to determine the specific gravity (coating material specific gravity) (g/cm$^3$).

(3) Heating residue (mass NV);

After weighing out 1 g of antifouling coating material composition into a flat-bottom dish, a wire of known mass was used for even spreading and the solution was dried at 125°C for 1 hour, after which the masses of the residue and wire were measured and the heating residue (mass%) was calculated.

(4) Measurement of antifouling coating material composition viscosity;

The viscosity of the antifouling coating material composition at 23°C was measured using a Rion viscometer (VISCOTESTER VT-04F by Rion Co., Ltd., for high viscosity, No.1 rotor).

(5) Storage stability test;

The antifouling coating material composition was allowed to stand in a thermostat at 50°C, and the state of the coating material (viscosity, film tension, and presence of precipitates or coarse grains) was confirmed once a month, taking note of the change of state from immediately after preparation.
The "film tension" was evaluated as "G" for no film tension, or "P" for film tension. Also, the "presence of precipitates or coarse grains" was evaluated as "G" for no observation of precipitates or coarse grains, or "P" for observation of precipitates or coarse grains.

(6) Antifouling coating film expendability test

An applicator was used for coating of 50 × 50 × 1.5 mm hard vinyl chloride sheets with the antifouling coating material composition to a dry film thickness of 150 μm, and the coatings were allowed to dry indoors for 7 days at room temperature (approximately 20°C), to prepare test sheets.
Each test sheet was attached to the side of a rotating drum set in a thermostatic bath containing 25°C seawater, which was rotated at a circumferential speed of 15 knots, and the antifouling coating film expendability (film thickness reduction) was measured each month.

(7) Antifouling coating film stationary antifouling property test

A 100 × 300 × 3.2 mm sand blast-treated steel sheet was coated with an epoxy-based coating material ("BANNOH 500" by Chugoku Marine Paints, Ltd.) to a dry film thickness of 150 μm and an epoxy-based binder coating material ("BANNOH 500N", product of Chugoku Marine Paints, Ltd.) to a dry film thickness of 100 μm, in that order with an interval of 1 day between them. After allowing one more day to elapse, the surface of the coating film formed from the epoxy-based binder coating material was coated with the antifouling coating material composition to a dry film thickness of 150 μm, to prepare a test sheet.
Each test sheet was dried at 23°C for 7 days and then stationarily submerged in Nagasaki Bay, Nagasaki Prefecture, and the area of adhering organisms was visually examined each month and evaluated on the following scale.

<Evaluation scale>

0: No adhesion of aquatic organisms
0.5: More than 0% and no greater than 10% adhesion area of aquatic organisms
1: More than 10% and no greater than 20% adhesion area of aquatic organisms
2: More than 20% and no greater than 30% adhesion area of aquatic organisms
3: More than 30% and no greater than 40% adhesion area of aquatic organisms
4: More than 40% and no greater than 50% adhesion area of aquatic organisms
5: More than 50% adhesion area of aquatic organisms

[Table 4]

| Name | Example | | | | | | | | | | | | | | | | | |
|---|---|---|---|---|---|---|---|---|---|---|---|---|---|---|---|---|---|---|
| | 8 | 9 | 10 | 11 | 12 | 13 | 14 | 15 | 16 | 17 | 18 | 19 | 20 | 21 | 22 | 23 | 24 | 25 |
| Polyester resin solution (a-1) | 8 | 8 | 8 | 8 | - | - | - | - | - | - | 9.5 | 6.5 | 9 | 9 | 9 | - | 11.5 | 7 |
| Polyester resin solution (a-2) | - | - | - | - | 8 | - | - | - | - | - | - | - | - | - | - | 9 | - | - |
| Polyester resin solution (a-3) | - | - | - | - | - | 8 | - | - | - | - | - | - | - | - | - | - | - | - |
| Polyester resin solution (a-4) | - | - | - | - | - | - | 8 | - | - | - | - | - | - | - | - | - | - | - |
| Polyester resin solution (a-5) | - | - | - | - | - | - | - | 8 | - | - | - | - | - | - | - | - | - | - |
| Polyester resin solution (a-6) | - | - | - | - | - | - | - | - | 8 | - | - | - | - | - | - | - | - | - |
| Polyester resin solution (a-7) | - | - | - | - | - | - | - | - | - | 8 | - | - | - | - | - | - | - | - |
| TCP (Tricresyl phosphate) | 5 | 5 | 5 | 5 | 5 | 5 | 5 | 5 | 5 | 5 | 5 | 5 | 5 | 5 | 5 | 5 | 5 | 5 |
| WW rosin | 5.5 | 5.5 | 5.5 | 5.5 | 5.5 | 5.5 | 5.5 | 5.5 | 5.5 | 5.5 | 4 | 7 | 9 | 9 | 9 | 9 | 6.5 | 11 |
| Xylene | 10.5 | 10.5 | 6 | 10.5 | 10.5 | 10.5 | 10.5 | 10.5 | 10.5 | 10.5 | 10.5 | 10.5 | 16.5 | 16.5 | 16.5 | 16.5 | 16.5 | 16.5 |
| MIBK | 2 | 2 | 2 | 2 | 2 | 2 | 2 | 2 | 2 | 2 | 2 | 2 | 3 | 3 | 3 | 3 | 3 | 3 |
| Cuprous oxide NC-803 | 48 | 48 | 48 | 48 | 48 | 48 | 48 | 48 | 48 | 48 | 48 | 48 | - | - | - | - | - | - |
| Disparlon A603-20X | 2 | 2 | 2 | 2 | 2 | 2 | 2 | 2 | 2 | 2 | 2 | 2 | 2 | 2 | 2 | 2 | 2 | 2 |
| Calcined Plaster FT-2 | 1 | 1 | 1 | 1 | 1 | 1 | 1 | 1 | 1 | 1 | 1 | 1 | 1 | 1 | 1 | 1 | 1 | 1 |
| Disperbyk-101 (BYK-101) | 0.3 | 0.3 | 0.3 | 0.3 | 03 | 0.3 | 0.3 | 0.3 | 0.3 | 03 | 0.3 | 0.3 | 0.5 | 0.5 | 0.5 | 0.5 | 0.5 | 0.5 |
| TTK Talc | 4 | 4.5 | 4 | 4 | 4 | 4 | 4 | 4 | 4 | 4 | 4 | 4 | 7 | 7 | 7 | 7 | 7 | 7 |
| Potassium feldspar | - | - | - | - | - | - | - | - | - | - | - | - | 4 | 4 | 4 | 4 | 4 | 4 |
| Titanium white R-5N | 2 | 2 | 2 | 2 | 2 | 2 | 2 | 2 | 2 | 2 | 2 | 2 | 3 | 3 | 3 | 3 | 3 | 3 |
| Zinc oxide | 6 | 6 | 6 | 6 | 6 | 6 | 6 | 6 | 6 | 6 | 6 | 6 | 25 | 25 | 25 | 25 | 25 | 25 |
| Zinc Omadine | - | - | - | - | - | - | - | - | - | - | - | - | 8 | 8 | 8 | 8 | 8 | 8 |

(continued)

| Name | Example | | | | | | | | | | | | | | | | | |
|---|---|---|---|---|---|---|---|---|---|---|---|---|---|---|---|---|---|---|
| | 8 | 9 | 10 | 11 | 12 | 13 | 14 | 15 | 16 | 17 | 18 | 19 | 20 | 21 | 22 | 23 | 24 | 25 |
| 2-Methylthio-4-t-butylamino-6-cyclopropylamino-s-triazine | 2.5 | - | - | - | 2.5 | 2.5 | 2.5 | 2.5 | 2.5 | 2.5 | 2.5 | 2.5 | 3 | - | - | - | - | - |
| Copper Omadine | | | | | | | | | - | | | | | | | | | - |
| 4,5-Dichloro-2-n-octyl-4-isothiazolin-3-one | - | - | 7 | - | - | - | - | - | - | - | - | - | - | 3 | - | - | - | - |
| 2-(p-Chlorophenyl)-3-cyano-4-bromo-5-tnauoromethy)pyrrote | - | - | - | 2.5 | - | - | - | - | - | - | - | - | - | - | - | 3 | 3 | 3 |
| Pyridine-triphenylborane | - | - | - | - | - | - | - | - | - | - | - | - | - | - | 3 | - | - | - |
| Bengala 404 | 2.3 | 2.3 | 2.3 | 2.3 | 2.3 | 23 | 23 | 23 | 2.3 | 2.3 | 2.3 | 2.3 | 3 | 3 | 3 | 3 | 3 | 3 |
| NOVAPERM RED F5RK | 0.6 | 0.6 | 0.6 | 0.6 | 0.6 | 0.6 | 0.6 | 0.6 | 0.6 | 0.6 | 0.6 | 0.6 | 0.5 | 0.5 | 0.5 | 0.5 | 0.5 | 0.5 |
| Ethyl Silicate 28 | 0.3 | 0.3 | 0.3 | 0.3 | 0.3 | 0.3 | 0.3 | 0.3 | 0.3 | 0.3 | 0.3 | 0.3 | 0.5 | 0.5 | 0.5 | 0.5 | 0.5 | 0.5 |
| [Total] | 100 | 100 | 100 | 100 | 100 | 100 | 100 | 100 | 100 | 100 | 100 | 100 | 100 | 100 | 100 | 100 | 100 | 100 |

[Table 5]

| Name | Comp. Ex. | | | | | | | | | | | | | | | | |
|---|---|---|---|---|---|---|---|---|---|---|---|---|---|---|---|---|---|
| | 7 | 8 | 9 | 10 | 11 | 12 | 13 | 14 | 15 | 16 | 17 | 18 | 19 | 20 | 21 | 22 | 23 |
| Polyester resin solution (a-8) | 8 | 8 | 8 | 8 | - | - | - | - | - | 9.5 | 6.5 | 9 | 9 | 9 | - | 11.5 | 7 |
| Polyester resin solution (a-9) | - | - | - | - | 8 | - | - | - | - | - | - | - | - | - | 9 | - | - |
| Polyester resin solution (a-10) | - | - | - | - | - | 8 | - | - | - | - | - | - | - | - | - | - | - |
| Polyester resin solution (a-11) | - | - | - | - | - | - | 8 | - | - | - | - | - | - | - | - | - | - |
| Polyester resin solution (a-12) | - | - | - | - | - | - | - | 8 | - | - | - | - | - | - | - | - | - |
| Polyester resin solution (b-1) | - | - | - | - | - | - | - | - | 8 | - | - | - | - | - | - | - | - |
| TCP (Tricresyl phosphate) | 5 | 5 | 5 | 5 | 5 | 5 | 5 | 5 | 5 | 5 | 5 | 5 | 5 | 5 | 5 | 5 | 5 |
| WW rosin | 5.5 | 5.5 | 5.5 | 5.5 | 5.5 | 5.5 | 5.5 | 5.5 | 5.5 | 4 | 7 | 9 | 9 | 9 | 9 | 6.5 | 11 |
| Xylene | 10.5 | 10.5 | 6 | 10.5 | 10.5 | 10.5 | 10.5 | 10.5 | 10.5 | 10.5 | 10.5 | 16.5 | 16.5 | 16.5 | 16.5 | 16.5 | 16.5 |
| MIBK | 2 | 2 | 2 | 2 | 2 | 2 | 2 | 2 | 2 | 2 | 2 | 3 | 3 | 3 | 3 | 3 | 3 |
| Cuprous oxide NC-803 | 48 | 48 | 48 | 48 | 48 | 48 | 48 | 48 | 48 | 48 | 48 | - | - | - | - | - | - |
| Disparlon A603-20X | 2 | 2 | 2 | 2 | 2 | 2 | 2 | 2 | 2 | 2 | 2 | 2 | 2 | 2 | 2 | 2 | 2 |
| Calcined Plaster FT-2 | 1 | 1 | 1 | 1 | 1 | 1 | 1 | 1 | 1 | 1 | 1 | 1 | 1 | 1 | 1 | 1 | 1 |
| Disperbyk-101 (BYK-101) | 0.3 | 0.3 | 0.3 | 0.3 | 0.3 | 03 | 0.3 | 0.3 | 0.3 | 0.3 | 0.3 | 0.5 | 0.5 | 0.5 | 0.5 | 0.5 | 0.5 |
| TTK Talc | 4 | 4.5 | 4 | 4 | 4 | 4 | 4 | 4 | 4 | 4 | 4 | 7 | 7 | 7 | 7 | 7 | 7 |
| Potassium feldspar | - | - | - | - | - | - | - | - | - | - | - | 4 | 4 | 4 | 4 | 4 | 4 |
| Titanium white R-5N | 2 | 2 | 2 | 2 | 2 | 2 | 2 | 2 | 2 | 2 | 2 | 3 | 3 | 3 | 3 | 3 | 3 |
| Zinc oxide | 6 | 6 | 6 | 6 | 6 | 6 | 6 | 6 | 6 | 6 | 6 | 25 | 25 | 25 | 25 | 25 | 25 |
| Zinc Omadine | - | - | - | - | - | - | - | - | - | - | - | 8 | 8 | 8 | 8 | 8 | 8 |
| 2-Methylthio-4-t-butylamino-6-cyclopropylamino-s-triazine | 2.5 | - | - | - | 2.5 | 2.5 | 2.5 | 2.5 | 2.5 | 2.5 | 2.5 | 3 | - | - | - | - | - |
| Copper Omadine | - | 2 | - | - | - | - | - | - | - | - | - | - | - | - | - | - | - |
| 4,5-Dichloro-2-n-octyl-4-isothiazolin-3-one | - | - | 7 | - | - | - | - | - | - | - | - | - | 3 | - | - | - | - |
| 2-(p-Chlorophenyl)-3-cyano-4-bromo-5-trifluoromethylpyrrole | - | - | - | 2.5 | - | - | - | - | - | - | - | - | - | - | - | 3 | 3 |
| Pyridine-triphenylborane | - | - | - | - | - | - | - | - | - | - | - | - | - | 3 | - | - | - |
| Bengala 404 | 2.3 | 23 | 2.3 | 2.3 | 2.3 | 2.3 | 2.3 | 2.3 | 2.3 | 2.3 | 2.3 | 3 | 3 | 3 | 3 | 3 | 3 |
| NOVAPERM RED F5RK | 0.6 | 0.6 | 0.6 | 0.6 | 0.6 | 0.6 | 0.6 | 0.6 | 0.6 | 0.6 | 0.6 | 0.5 | 0.5 | 0.5 | 0.5 | 0.5 | 0.5 |
| Ethyl Silicate 28 | 0.3 | 0.3 | 0.3 | 0.3 | 0.3 | 0.3 | 0.3 | 0.3 | 0.3 | 0.3 | 0.3 | 0.5 | 0.5 | 0.5 | 0.5 | 0.5 | 0.5 |

| Name | Comp. Ex. | | | | | | | | | | | | | | | | |
|---|---|---|---|---|---|---|---|---|---|---|---|---|---|---|---|---|---|
| | 7 | 8 | 9 | 10 | 11 | 12 | 13 | 14 | 15 | 16 | 17 | 18 | 19 | 20 | 21 | 22 | 23 |
| [Total] | 100 | 100 | 100 | 100 | 100 | 100 | 100 | 100 | 100 | 100 | 100 | 100 | 100 | 100 | 100 | 100 | 100 |

[Table 6]

| Property | | 8 | 9 | 10 | 11 | 12 | 13 | 14 | 15 | 16 | 17 | 18 | 19 | 20 | 21 | 22 | 23 | 24 | 25 |
|---|---|---|---|---|---|---|---|---|---|---|---|---|---|---|---|---|---|---|---|
| | | | | | | | | | | | | Example | | | | | | | |
| Specific gravity | | 2.05 | 2.08 | 2.04 | 2.07 | 2.05 | 2.05 | 2.05 | 2.05 | 2.05 | 2.05 | 2.04 | 2.05 | 1.55 | 1.55 | 1.56 | 1.56 | 1.55 | 1.55 |
| Heating residue (wt%) | | 82.9 | 82.9 | 82.9 | 82.9 | 82.9 | 82.9 | 82.9 | 82.9 | 82.9 | 82.9 | 82.4 | 83.5 | 75.5 | 75.5 | 75.5 | 75.5 | 74.6 | 76.2 |
| VOC (g/L) | | 347 | 353 | 354 | 352 | 347 | 347 | 347 | 347 | 347 | 347 | 358 | 338 | 377 | 377 | 381 | 381 | 390 | 366 |
| Initial | Viscosity | 15 | 14 | 15 | 15 | 12 | 12 | 13 | 13 | 13 | 13 | 14 | 10 | 16 | 17 | 18 | 18 | 19 | 15 |
| | Film tension | G | G | G | G | G | G | G | G | G | G | G | G | G | G | G | G | G | G |
| | Precipitates, coarse grains | G | G | G | G | G | G | G | G | G | G | G | G | G | G | G | G | G | G |
| Storage stability (viscosity: dPa·s) | 1 month, 50°C Viscosity | 15 | 14 | 16 | 15 | 12 | 12 | 13 | 14 | 14 | 13 | 14 | 11 | 17 | 18 | 18 | 18 | 19 | 15 |
| | Film tension | G | G | G | G | G | G | G | G | G | G | G | G | G | G | G | G | G | G |
| | Precipitates, coarse grains | G | G | G | G | G | G | G | G | G | G | G | G | G | G | G | G | G | G |
| | 2 month, 50°C Viscosity | 15 | 15 | 16 | 16 | 13 | 12 | 13 | 14 | 14 | 14 | 15 | 11 | 18 | 18 | 18 | 18 | 19 | 16 |
| | Film tension | G | G | G | G | G | G | G | G | G | G | G | G | G | G | G | G | G | G |
| | Precipitates, coarse grains | G | G | G | G | G | G | G | G | G | G | G | G | G | G | G | G | G | G |
| Coated film expendability (μm, cumulative value) (25°C/15 knots) | 1 month | 9.8 | 7.7 | 11.2 | 13.3 | 8.7 | 9.3 | 10.3 | 9.5 | 12.3 | 11.1 | 12.3 | 9.6 | 13.4 | 11.2 | 13.3 | 10.4 | 8.9 | 12.3 |
| | 2 month | 13.3 | 14.5 | 17.8 | 18.7 | 13.5 | 14.5 | 15.6 | 13.3 | 17.8 | 17.8 | 19.8 | 14.5 | 22.5 | 18.7 | 19.8 | 18.8 | 15.6 | 18.7 |
| | 3 month | 21.8 | 19.8 | 24.5 | 23.4 | 21.5 | 21.4 | 21.4 | 18.8 | 22.3 | 26.7 | 27.6 | 20.9 | 29.8 | 24.5 | 27.6 | 26.7 | 23.4 | 24.5 |
| | 4 month | 29.8 | 26.5 | 32.6 | 31.5 | 27.8 | 27.8 | 28.8 | 24.5 | 29.8 | 32.5 | 35.6 | 27.8 | 36.7 | 31.6 | 33.7 | 33.4 | 31.3 | 30.7 |
| | 5 month | 35.4 | 33.5 | 39.8 | 38.8 | 33.5 | 35.6 | 35.6 | 30.6 | 35.6 | 39.8 | 41.3 | 34.5 | 43.8 | 39.8 | 40.8 | 41.3 | 39.8 | 38.9 |
| | 6 month | 41.5 | 43.3 | 48.7 | 44.5 | 40.8 | 44.3 | 44.4 | 38.9 | 43.3 | 47.3 | 50.6 | 43.2 | 52.3 | 47.6 | 49.8 | 50.6 | 46.7 | 45.6 |

(continued)

| | Name | Example | | | | | | | | | | | | | | | | | |
|---|---|---|---|---|---|---|---|---|---|---|---|---|---|---|---|---|---|---|---|
| | | 8 | 9 | 10 | 11 | 12 | 13 | 14 | 15 | 16 | 17 | 18 | 19 | 20 | 21 | 22 | 23 | 24 | 25 |
| Stationary antifouling property | 1 month | 0 | 0 | 0 | 0 | 0 | 0 | 0 | 0 | 0 | 0 | 0 | 0 | 0 | 0 | 0 | 0 | 0 | 0 |
| | 2 month | 0 | 0 | 0 | 0 | 0 | 0 | 0 | 0 | 0 | 0 | 0 | 0 | 0 | 0 | 0 | 0 | 0 | 0 |
| | 3 month | 0 | 0 | 0.5 | 0 | 0 | 0 | 0 | 0 | 0 | 0 | 0 | 0 | 0 | 0 | 0 | 0 | 0 | 0 |
| | 4 month | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | 5 month | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | 6 month | 0.5 | 0.5 | 1 | 1 | 1 | 0.5 | 1 | 0.5 | 1 | 1 | 1 | 0.5 | 0.5 | 0.5 | 1 | 0.5 | 1 | 0.5 |

[Table 7]

| Property | | | Comp. Ex. | | | | | | | | | | | | | | | | |
|---|---|---|---|---|---|---|---|---|---|---|---|---|---|---|---|---|---|---|---|
| | | | 7 | 8 | 9 | 10 | 11 | 12 | 13 | 14 | 15 | 16 | 17 | 18 | 19 | 20 | 21 | 22 | 23 |
| Property | | Specific gravity | 2.05 | 2.08 | 2.04 | 2.07 | 2.05 | 2.05 | 2.05 | 2.05 | 2.05 | 2.04 | 2.05 | 1.55 | 1.55 | 1.56 | 1.56 | 1.55 | 1.55 |
| | | Heating residue (wt%) | 82.9 | 82.9 | 82.5 | 82.9 | 82.9 | 82.9 | 82.9 | 82.9 | 82.9 | 82.4 | 83.5 | 75.5 | 75.5 | 75.5 | 75.5 | 74.6 | 76.2 |
| | | VOC (g/L) | 347 | 353 | 354 | 352 | 347 | 347 | 347 | 347 | 347 | 358 | 337 | 377 | 377 | 381 | 381 | 390 | 366 |
| | Initial | Viscosity | 8 | 11 | 13 | 11 | 12 | 12 | 10 | 9 | 9 | 11 | 11 | 18 | 20 | 18 | 17 | 16 | 18 |
| | | Film tension | G | G | G | G | G | G | G | G | G | 0 | G | G | G | G | G | G | G |
| | | Precipitates, coarse grains | G | G | G | G | G | G | G | G | G | G | G | G | G | G | G | G | G |
| Storage stability (viscosity: dPa·s) | 1 month, 50°C | Viscosity | 23 | 24 | 26 | 19 | 23 | 24 | 19 | 21 | 17 | 19 | 22 | 35 | 31 | 38 | 29 | 25 | 29 |
| | | Film tension | P | P | P | P | P | P | P | P | P | P | P | P | P | P | P | P | P |
| | | Precipitates, coarse grains | P | P | P | P | P | P | P | P | P | P | P | P | P | P | P | P | P |
| | 2 month, 50°C | Viscosity | 25 | 28 | 31 | 29 | 29 | 32 | 27 | 29 | 26 | 34 | 32 | 43 | 39 | 47 | 43 | 48 | 53 |
| | | Film tension | P | P | P | P | P | P | P | P | P | P | P | P | P | P | P | P | P |
| | | Precipitates, coarse grains | P | P | P | P | P | P | P | P | P | P | P | P | P | P | P | P | P |
| Coated film expendability (μm, cumulative value) (25°C/ 15 knots) | | 1 month | 10.5 | 8.7 | 9.8 | 11.1 | 10.6 | 8.9 | 7.8 | 12.3 | 11.3 | 9.3 | 8.6 | 10.8 | 12.3 | 11.3 | 8.6 | 12.3 | 9.8 |
| | | 2 month | 13.3 | 10.3 | 11.1 | 14.5 | 143 | 12.3 | 10.4 | 15.6 | 15.7 | 13.3 | 12.4 | 14.5 | 17.8 | 15.6 | 12.1 | 16.7 | 14.1 |
| | | 3 month | 16.7 | 13.3 | 13.4 | 17.7 | 17.7 | 15.6 | 12.3 | 19.9 | 20.7 | 18.8 | 17.8 | 18.9 | 22.3 | 21.4 | 15.5 | 19.4 | 18.8 |
| | | 4 month | 19.8 | 16.7 | 16.7 | 20.1 | 22.4 | 18.8 | 15.4 | 24.5 | 25.4 | 22.5 | 22.4 | 23.4 | 27.8 | 26.5 | 18.7 | 25.7 | 23.5 |
| | | 5 month | 22.3 | 20.4 | 19.7 | 23.4 | 26.7 | 22.3 | 18.9 | 28 | 29.7 | 25.8 | 29.8 | 29.8 | 33.3 | 31.6 | 22.3 | 30.5 | 28.9 |
| | | 6 month | 24.5 | 23.3 | 21.2 | 26.5 | 30.1 | 25.9 | 22.2 | 31.3 | 33.3 | 29.7 | 31.2 | 35.6 | 40.7 | 37.6 | 26.7 | 35.9 | 34.5 |
| Stationary antifouling property | | 1 month | 0 | 0 | 0 | 0 | 0 | 0 | 0 | 0 | 0 | 0 | 0 | 0 | 0 | 0 | 0 | 0 | 0 |
| | | 2 month | 0 | 0 | 0.5 | 0 | 0 | 0.5 | 0 | 0 | 0 | 0.5 | 0 | 0 | 0 | 0.5 | 0.5 | 0 | 0 |
| | | 3 month | 0 | 0.5 | 0.5 | 0.5 | 0.5 | 0.5 | 0 | 0.5 | 0.5 | 0.5 | 0.5 | 0.5 | 0.5 | 0.5 | 0.5 | 0.5 | 0 |
| | | 4 month | 0.5 | 0.5 | 1 | 0.5 | 0.5 | 0.5 | 0.5 | 0.5 | 0.5 | 1 | 1 | 1 | 1 | 1 | 0.5 | 0.5 | 0.5 |
| | | 5 month | 1 | 1 | 2 | 1 | 1 | 1 | 1 | 1 | 1 | 1 | 1 | 1 | 1 | 1 | 1 | 1 | 1 |
| | | 6 month | 2 | 1 | 2 | 1 | 1 | 1 | 2 | 1 | 1 | 1 | 1 | 1 | 1 | 1 | 1 | 1 | 1 |

The details for some of the starting materials used in the examples and comparative examples are shown in Table 8.

[Table 8]

| Product name | Maker | Type | Solid portion |
|---|---|---|---|
| TTK Talc | Fukuoka Talc | Extender pigment | 100 |
| Zinc oxide (mean particle diameter: 0.2-3 $\mu$m) | Kyushu Hakusui Chen. | Extender pigment | 100 |
| NOVAPERM RED F5RK | Clariant North America | Organic red pigment | 100 |
| Zinc Omadine | Arch Chem. | Organic antifouling agent | 100 |
| Copper Omadine | Arch Chem. | Organic antifouling agent | 100 |
| Bengala 404 | Toda Indus. | Coloring pigment | 100 |
| TCP (Tricresyl phosphate) | Kyowa Hakko Indus. | Plasticizer | 100 |
| Potassium feldspar | KINSEI MATIC | Potassium feldspar | 100 |
| Titanium white R-5N | Sakai Chemical | Coloring pigment | 100 |
| 4,5 -Dichloro-2-n-octyl-4-isothiazolin-3-one | Rohm & Haas | Organic antifouling agent | 30 |
| WW rosin | | Solid resin | 100 |
| BYK-101 | BYK CHEMICAL | Pigment dispersant | 100 |
| 2-Methylthio-4-t-butylamino-6-cyclopropylamino-s-triazine | Ciba | Organic antifouling agent | 100 |
| N,N'-Dimethyl-N'-tolyl-(N-fluorodichloromethylthio) sulfamide | Bayer, Japan | Organic antifouling agent | 100 |
| 2-(p-Chlorophenyl)-3-cyano-4-bromo-5-trifluoromethylpyrrole | JANSSEN | Organic antifouling agent | 100 |
| Pyridine-triphenylborane | Hokko Chem. Indus. | Organic antifouling agent | 100 |
| Medetomidine | i-Tech | Organic antifouling agent | 100 |
| Cuprous oxide NC-803 | NC Tech. | Inorganic antifouling agent | 100 |
| Dis603-20XC | Kusumoto Chem. | Anti-running agent | 20 |

## Claims

1. Use of a coating composition comprising a polyester resin for preventing fouling of a base material, wherein the polyester resin is obtained by reacting a (a) trihydric or greater alcohol, a (b) dibasic acid or its anhydride and a (c) divalent alcohol, and then further reacting with an (d) alicyclic dibasic acid or its anhydride.

2. The use according to claim 1, wherein the (d) alicyclic dibasic acid or its anhydride is an alicyclic dibasic acid anhydride.

3. The use according to claim 1 or 2, wherein the (d) alicyclic dibasic acid or its anhydride comprises hexahydrophthalic anhydride.

4. The use according to any one of claims 1 to 3, wherein the (a) trihydric or greater alcohol comprises one or more of glycerin and trimethylolpropane.

**5.** The use according to any one of claims 1 to 4, wherein the polyester resin comprises one or more of an alicyclic dibasic acid anhydride and an aromatic dibasic acid anhydride as the (b) dibasic acid or its anhydride.

**6.** The use according to any one of claims 1 to 4, wherein the (c) divalent alcohol is a branched alkylene glycol.

**7.** The use according to claim 1, wherein the polyester resin comprises a compound having the structure represented by formula (1):

$$R^1 (O\text{-}CO\text{-}R^2\text{-}CO\text{-}O\text{-}R^3\text{-}O\text{-}CO\text{-}R^4\text{-}CO\text{-}OH)_n \cdots \qquad (1)$$

wherein $R^1$ is selected from among C3-24 trivalent or tetravalent hydrocarbon groups, $R^2$ and $R^3$ are selected from among C2-34 divalent hydrocarbon groups, $R^4$ is selected from among C3-24 divalent alicyclic hydrocarbon groups, and n represents an integer of 3 or 4.

**8.** The use according to any one of claims 1 to 7, wherein the acid value of the solid portion of the polyester resin is 50 to 250 mgKOH/g.

**9.** The use according to any one of claims 1 to 8, wherein the coating composition further comprises a polyvalent metal compound.

**10.** The use according to claim 9, wherein the polyvalent metal compound is at least one compound selected from the group consisting of oxides, hydroxides, halides and carbonates of divalent or trivalent metals.

**11.** The use according to claim 9 or 10, wherein the polyvalent metal compound is zinc oxide.

**12.** The use according to any one of claims 9 to 11, wherein the polyvalent metal compound content of the coating composition is 10 to 700 parts by mass with respect to 100 parts by mass of the polyester resin.

**13.** The use according to any one of claims 1 to 12, further comprising one or more of (i) a rosin and/or a rosin derivative, (ii) an antifouling agent, (iii) a plasticizer, (iv) an extender pigment (excluding said polyvalent metal compound), (v) a pigment dispersant, (vi) a color pigment, (vii) a dehydrating agent, and (viii) a volatile organic compound, wherein the volatile organic compound content is no greater than 400 g/L.

**Patentansprüche**

**1.** Verwendung einer Beschichtungszusammensetzung, die ein Polyesterharz umfasst, zur Verhinderung von Fouling eines Basismaterials, wobei das Polyesterharz erhalten wird durch Umsetzen eines (a) drei- oder höherwertigen Alkohols, einer (b) zweiprotonigen Säure oder ihrem Anhydrid und eines (c) zweiwertigen Alkohols und dem anschließenden Umsetzen mit einer (d) alicyclischen zweiprotonigen Säure oder ihrem Anhydrid.

**2.** Verwendung gemäß Anspruch 1, wobei die (d) alicyclische zweiprotonige Säure oder ihr Anhydrid ein alicyclisches zweiprotoniges Säureanhydrid ist.

**3.** Verwendung gemäß Anspruch 1 oder 2, wobei die (d) alicyclische zweiprotonige Säure oder ihr Anhydrid Hexahydrophthalsäureanhydrid umfasst.

**4.** Verwendung gemäß Anspruch 1 bis 3, wobei der (a) drei- oder höherwertige Alkohol eines oder mehrere von Glycerin und Trimethylolpropan umfasst.

**5.** Verwendung gemäß einem der Ansprüche 1 bis 4, wobei das Polyesterharz ein oder mehrere von einem alicyclischen zweiprotonigen Säureanhydrid und einem aromatischen zweiprotonigen Säureanhydrid als die (b) zweiprotonige Säure oder ihrem Anhydrid umfasst.

**6.** Verwendung gemäß einem der Ansprüche 1 bis 4, wobei der (c) zweiwertige Alkohol ein verzweigtes Alkylenglykol ist.

**7.** Verwendung gemäß Anspruch 1, wobei das Polyesterharz eine Verbindung mit einer Struktur der Formel (1) umfasst:

$$R^1(O\text{-}CO\text{-}R^2\text{-}CO\text{-}O\text{-}R^3\text{-}O\text{-}CO\text{-}R^4\text{-}CO\text{-}OH)_n \cdots \qquad (1)$$

worin $R^1$ ausgewählt ist aus C3-24 dreiwertigen oder vierwertigen Kohlenwasserstoffgruppen, $R^2$ und $R^3$ ausgewählt sind aus C2-34 zweiwertigen Kohlenwasserstoffgruppen, $R^4$ ausgewählt ist aus C3-24 zweiwertigen Kohlenwasserstoffgruppen und n für eine ganze Zahl von 3 oder 4 steht.

8. Verwendung gemäß einem der Ansprüche 1 bis 7, wobei der Säurewert des Feststoffanteils des Polyesterharzes 50 bis 250 mg/KOH/g beträgt.

9. Verwendung gemäß einem der Ansprüche 1 bis 8, wobei die Beschichtungszusammensetzung ferner eine mehrwertige Metallverbindung umfasst.

10. Verwendung gemäß Anspruch 9, wobei die mehrwertige Metallverbindung mindestens eine Verbindung ist, die ausgewählt ist aus der Gruppe bestehend aus Oxiden, Hydroxiden, Halogeniden und Carbonaten von zweiwertigen oder dreiwertigen Metallen.

11. Verwendung gemäß Anspruch 9 oder 10, wobei die mehrwertige Metallverbindung Zinkoxid ist.

12. Verwendung gemäß einem der Ansprüche 9 bis 11, wobei der Gehalt der mehrwertigen Metallverbindung in der Beschichtungszusammensetzung 10 bis 700 Massenteile beträgt, in Bezug auf 100 Massenteile des Polyesterharzes.

13. Verwendung gemäß einem der Ansprüche 1 bis 12, ferner umfassend eines oder mehrere von (i) einem Kolophonium und/oder einem Kolophoniumderivat, (ii) einem Antifoulingmittel, (iii) einem Weichmacher, (iv) einem Verschnittpigment (mit Ausnahme der mehrwertigen Metallverbindung), (v) einem Pigmentdispergiermittel, (vi) einem Farbpigment, (vii) einem Dehydratisierungsmittel und (viii) einer flüchtigen organischen Verbindung, wobei der Gehalt der flüchtigen organischen Verbindung nicht höher als 400 g/L ist.

## Revendications

1. Utilisation d'une composition de revêtement comprenant une résine de polyester pour prévenir la salissure d'un matériau de base, dans laquelle la résine de polyester est obtenue par réaction d'un (a) alcool trihydrique ou supérieur, d'un (b) acide dibasique ou son anhydride et d'un (c) alcool divalent, et ensuite par réaction supplémentaire avec un (d) acide dibasique alicyclique ou son anhydride.

2. Utilisation selon la revendication 1, dans laquelle (d) l'acide dibasique alicyclique ou son anhydride est un anhydride d'acide dibasique alicyclique.

3. Utilisation selon la revendication 1 ou 2, dans laquelle (d) l'acide dibasique alicyclique ou son anhydride comprend un anhydride hexahydrophtalique.

4. Utilisation selon l'une quelconque des revendications 1 à 3, dans laquelle (a) l'alcool trihydrique ou supérieur comprend un ou plusieurs de la glycérine et du triméthylolpropane.

5. Utilisation selon l'une quelconque des revendications 1 à 4, dans laquelle la résine de polyester comprend un ou plusieurs d'un anhydride d'acide dibasique alicyclique et d'un anhydride d'acide dibasique aromatique en tant que (b) acide dibasique ou son anhydride.

6. Utilisation selon l'une quelconque des revendications 1 à 4, dans laquelle (c) l'alcool divalent est un alkylène glycol ramifié.

7. Utilisation selon la revendication 1, dans laquelle la résine de polyester comprend un composé ayant la structure représentée par la formule (1) :

$$R^1(O\text{-}CO\text{-}R^2\text{-}CO\text{-}O\text{-}R^3\text{-}O\text{-}CO\text{-}R^4\text{-}CO\text{-}OH)_n \cdots \qquad (1)$$

dans laquelle $R^1$ est choisi parmi les groupes hydrocarbonés trivalents ou tétravalents en C3-24, $R^2$ et $R^3$ sont

choisis parmi les groupes hydrocarbonés divalents en C2-34, R$^4$ est choisi parmi les groupes hydrocarbonés alicycliques divalents en C3-24, et n représente un nombre entier de 3 ou 4.

8.  Utilisation selon l'une quelconque des revendications 1 à 7, dans laquelle l'indice d'acidité de la portion solide de la résine de polyester est de 50 à 250 mgKOH/g.

9.  Utilisation selon l'une quelconque des revendications 1 à 8, dans laquelle la composition de revêtement comprend en outre un composé métallique polyvalent.

10. Utilisation selon la revendication 9, dans laquelle le composé métallique polyvalent est au moins un composé choisi dans le groupe constitué des oxydes, des hydroxydes, des halogénures et des carbonates de métaux divalents ou trivalents.

11. Utilisation selon la revendication 9 ou 10, dans laquelle le composé métallique polyvalent est l'oxyde de zinc.

12. Utilisation selon l'une quelconque des revendications 9 à 11, dans laquelle la teneur en composé métallique polyvalent de la composition de revêtement est de 10 à 700 parties en masse par rapport à 100 parties en masse de la résine de polyester.

13. Utilisation selon l'une quelconque des revendications 1 à 12, comprenant en outre un ou plusieurs de (i) une rosine et/ou un dérivé de rosine, (ii) un agent antisalissure, (iii) un plastifiant, (iv) un pigment de charge (à l'exclusion dudit composé métallique polyvalent), (v) un dispersant de pigment, (vi) un pigment colorant, (vii) un agent déshydratant, et (viii) un composé organique volatil, dans laquelle la teneur en composé organique volatil n'est pas supérieure à 400 g/l.

**EP 2 873 683 B1**

**REFERENCES CITED IN THE DESCRIPTION**

**Patent documents cited in the description**

- JP 2010095585 A
- JP 4621901 B
- US 5397641 A
- EP 0522648 A1
- WO 2011162359 A1